## Europäisches Patentamt
## European Patent Office
## Office européen des brevets

(19)

(11) Veröffentlichungsnummer : **0 113 857**
**B1**

(12)

# EUROPÄISCHE PATENTSCHRIFT

(45) Veröffentlichungstag der Patentschrift :
30.07.86

(21) Anmeldenummer : 83112327.8

(22) Anmeldetag : 08.12.83

(51) Int. Cl.⁴ : **A 01 N 25/02, A 01 N 61/00**

(54) Herbizide Mittel.

(30) Priorität : **20.12.82 DE 3247050**

(43) Veröffentlichungstag der Anmeldung :
**25.07.84 Patentblatt 84/30**

(45) Bekanntmachung des Hinweises auf die Patenterteilung : **30.07.86 Patentblatt 86/31**

(84) Benannte Vertragsstaaten :
**AT BE CH DE FR GB IT LI NL**

(56) Entgegenhaltungen :
DE-A- 1 950 380
FR-A- 1 567 522
US-A- 2 841 483
US-A- 3 948 635
US-A- 3 997 322
US-A- 4 182 621
CHEMICAL ABSTRACTS, Band 83, Nr. 21, 24. November 1975, Seiten 147-148, Nr. 173771u, Columbus,
Ohio, US

(73) Patentinhaber : **BAYER AG**
**Konzernverwaltung RP Patentabteilung**
**D-5090 Leverkusen 1 Bayerwerk (DE)**

(72) Erfinder : **Hausmann, Heinz, Dr.**
**Dierath 5**
**D-5653 Leichlingen 1 (DE)**
Erfinder : **Schmidt, Robert R., Dr.**
**Im Waldwinkel 110**
**D-5060 Bergisch-Gladbach 2 (DE)**
Erfinder : **Voege, Herbert, Dr.**
**Martin-Buber-Strasse 41**
**D-5090 Leverkusen 3 (DE)**

**Beschreibung**

Die Erfindung betriff herbizide, synergistische Stoffkombinationen, die neben einem bekannten Herbizid das bekannte synthetische Spreitmittel Isopropylmyristat enthalten und mit Vorteil zur Unkrautbekämpfung verwendet werden können.

Es ist bereits bekannt, daß der Zusatz größerer Mengen an Spreitmitteln zu Formulierungen, z. B. in der Pharmazie, zur Resorptionsverbesserung führt (vgl. DE-OS 2 614 841).

Weiterhin ist bereits bekannt, daß Zusätze von oberflächenaktiven Stoffen zu Pestizid-Formulierungen, die über dem Gehalt liegen, der benötigt wird, um die Oberflächenspannungen wäßriger Spritzbrühen herabzusetzen, und die gegebenenfalls weitere Hilfsstoffe enthalten, zu Wirkungssteigerungen führen können (vgl. EP 22 666). So ist auch der Zusatz von Siloxanen als oberflächenaktive Mittel zu Atrazinen, die als Herbizide bekannt sind, beschrieben (vgl. DE-A-1 950 380). Weiterhin wird ein Herbizidsynergismus von 2,4-Dinitro-6-alkylphenol in mit Polyglykoletheralkohol-Komponenten beschrieben (vgl. US-A-2 841 483).

Außerdem ist bekannt, daß z. B. Triazine, wie z. B. 1-Amino-3-(2,2-dimethylpropyl)-6-ethylthio-1,3,5-triazin-2,4-(1H,3H)-dion, als Herbizide verwendet werden können (vgl. z. B. DK-PS 136 067).

Es wurde nun überraschend gefunden, daß die neuen Stoffkombinationen die au 1 Gew.-Teil Spreitmittel 0,01 bis 10 Gew.-Teile eines Herbizids enthalten, eine besonders hohe herbizide Wirkung aufweisen.

Überraschdenderweise ist die Wirksamkeit der erfindungsgemäßen Stoffkombinationen wesentlich höher als die Summe der Wirkungen der einzelnen Stoffe, wobei das Spreitmittel keine oder eine zu vernachlässigende Eigenwirkung hat. Es liegt ein nicht vorhersehbarer echter synergistischer Effekt vor und nicht nur ein additiver Effekt.

Diese Wirkungssteigerung durch Zusatz bekannter im Pflanzenschutz unwirksamer Verbindungen ist besonders wichtig, da dadurch die Wirkstoffkonzentration bei gleich gutem Ergebnis reduziert wird. Weiterhin ist die leichte Handhabung solcher Stoffkombinationen hervorzuheben, die als Tankmix angewendet werden können, d. h. am Ort wird das Herbizid in Wasser suspendiert und das käufliche Spreitmittel, dem ein Emulgator zugesetzt wird, zugegeben. Die Mischung kann direkt ausgebracht werden, wodurch keine Stabilitätsfragen u. a. auftauchen, was ein weiterer Vorteil ist. Andererseits lassen sich Wirkstoffe und Spreitmittel in an sich bekannter Weise auch zu Fertigformulierungen verarbeiten.

Die neuen Stoffkombinationen sind somit eine wertvolle Bereicherung im Rahmen der Unkrautbekämpfung.

Unter Herbiziden sind im vorliegenden Fall die zur Unkrautbekämpfung geeigneten im folgenden aufgezählten Verbindungen zu verstehen :

a) 2-Chlor-4-ethylamino-6-isopropyl-amino-s-triazin (Atrazin),

b) 4-Amino-3-methyl-6-phenyl-as-triazin-5-(4H)-on (Metamitron) oder

c) 1-Amino-3-(2,2-dimethylpropyl)-6-ethylthio-s-triazin-2,4-dion (Ametridion).

Unter synthetischen Spreitmittel ist das Isopropylmyristat zu verstehen.

Unter Unkraut im weitesten Sinne sind alle Pflanzen zu verstehen, die an Orten aufwachsen, wo sie unerwünscht sind.

Die erfindungsgemäßen Stoffkombinationen eignen sich in Abhängigkeit von der Konzentration zur Totalunkrautbekämpfung z. B. auf Industrie- und Gleisanlagen und auf Wegen und Plätzen mit und ohne Baumbewuchs. Ebenso können die Kombination z. B. zur Unkrautbekämpfung in Dauerkulturen, z. B. Forst-, Ziergehölz-, Obst-, Wein-, Citrus-, Nuß-, Bananen-, Kaffee-, Tee-, Gummi-, Ölpalm-, Kakao-, Beerenfrucht-, und Hopfenanlagen und zur selektiven Unkrautbekämpfung eingesetzt werden.

Der erhöhte Wirkungseffekt der erfindungsgemäßen Stoffkombination ist bei bestimmten Konzentrationsverhältnissen besonders stark ausgeprägt. Jedoch können die Gewichtsverhältnisse der Komponenten in den Kombinationen in relativ großen Bereichen variiert werden. Im allgemeinen entfallen auf 1 Gewichtsteil Spreitmittel 0.01 bis 10 Gewichteile eines Herbizids vorzugsweise 0.05 bis 7.5 Gewichsteile eines Herbizids.

Die Stoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, wirkstoffimprägnierte Natur- und synthetische Stoffe sowie Feinstverkapselungen in polymeren Stoffen.

Diese Formulierungen werden in bekannter Weise hergestellt, z. B. durch Vermischen der Stoffe mit flüssigen Lösungsmitteln und/oder festen Trägerstoffen, gegebenenfalls unter Verwendung von grenzflächenaktiven Mitteln, also Emulgiermitteln und/oder Dispergiermitteln und/oder schamerzeugenden Mitteln.

Im Falle der Benutzung von Wasser als Streckmittel können z. B. auch organische Lösungsmittel als Hilfslösungsmittel verwendet werden. Als flüssige Lösungsmittel kommen im wesentlichen in Frage : Aromaten, wie Xylol, Tolulol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, mineralische und pflanzliche Öle, Alkohole, wie Butanol oder Glycol sowie deren Ether und Ester, Ketone wie Aceton, Methylethylketon, Methylisobu-

tylketon oder Cyclohexanon, stark polare Lösungsmittel, wie Dimethylformamid und Dimethylsulfoxid, sowie Wasser.

Als feste Trägerstoffe kommen in Frage : z. B. Ammoniumsalze und natürliche Gesteinsmehle, wie Kaoline, Tonerden, Talkum, Kreide, Quarz, Attapulgit, Montmorrillonit oder Diatomeenerde und synthetische Gesteinsmehle, wie hochdisperse Kieselsäure, Aluminiumoxid und Silikate, als feste Trägerstoffe für Granulate kommen infrage : z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln ; als Emulgier- und/oder schaumerzeugende Mittel kommen infrage : z. B. nichtionogene und anionische Emulgatoren, wie Polyoxyethylen-Fettsäure-Ester, Polyoxyethylen-Fettalkohol-Ether, z. B. Alkylaryl-polyglykolether, Alkylsufonate, Alkylsulfate, Arylsulfonate, sowie Eiweißhydrolysate ; als Dispergiermittel kommen infrage : z. B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azo-, und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Stoffkombination, vorzugsweise zwischen 0,5 und 90 %.

Die erfindungsgemäßen Kombinationen können in Form von Fertigformulierungen zur Anwendung gebracht werden. Die in den Kombinationen enthaltenen Stoffe können aber auch als Einzelformulierungen bei der Anwendung gemischt, d. h. in Form von Tankmischungen zur Anwendung gebracht werden.

Die neuen Kombinationen können als solche oder in Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die neuen Kombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten, und Granulate angewandt werden. Die Anwendung geschieht in üblicher Weise, z. B. durch Gießen, Spritzen, Sprühen, Stäuben oder Streuen.

Die Aufwandmengen der erfindungsgemäßen Stoffkombination können in einem gewissen Bereich variiert werden ; sie hängen u. a. vom Wetter und von den Bodenfaktoren ab. Im allgemeinen liegen die Aufwandmengen zwischen 0,005 und 20 kg Wirkstoffkombination pro ha, vorzugsweise zwischen 0,01 und 10 kg/ha.

Die erfindungsgemäßen Stoffkombinationen können sowohl vor als auch nach dem Auflaufen der Pflanzen appliziert werden. Sie können auch vor der Saat in den Boden eingearbeitet werden.

Die erhöhte herbizide Wirking der neuen Stoffkombinationen geht aus den nachfolgenden Beispielen hervor. Während die einzelnen Stoffe in der herbiziden Wirkung Schwächen aufweisen, zeigen die Kombinationen eine sehr breite Unkrautwirkung ; die über eine einfache Wirkungssummierung hinausgeht.

Ein synergistischer Effekt liegt bei Herbiziden immer dann vor, wenn die herbizide Wirkung der Wirkstoffkombination größer ist als die der einzeln applizierten Stoffe.

Die zu erwartende Wirkung für eine gegebene Kombination zweier Stoffe kann wie folgt berechnet werden (vgl. COLBY, S.R., « Calculating synergistic and antagonistic responses of herbizide combinations », Weeds 15, Seiten 20-22, 1967) :

Wenn

X = % Schädigung durch Herbizid bei p kg/ha Aufwandmenge und

Y = % Schädigung durch Spreitmittel bei q kg/ha Aufwandmenge und

E = die erwartete Schädigung der Stoffe A u. B, bei p und q kg/ha Aufwandmenge,

dann ist

$$E = X + Y - (X \cdot Y/100)$$

Ist die tatsächliche Schädigung größer als berechnet, so ist die Kombination in ihrer Wirkung überadditiv, d. h. sie zeigt einen synergistischen Effekt.

Aus den nachfolgenden Beispielen geht hervor, daß die gefundene herbizide Wirkung der erfindungsgemäßen Stoffkombination bei den Unkräutern größer ist als die berechnete, d. h., daß die neue Stoffkombination synergistisch wirkt.

Beispiel

Post-emergence-Test

0 113 857

Lösungsmittel : 5 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5-15 cm haben, so daß die jeweils gewünschten Wirkstoffmengen pro Flächeneinheit ausgebracht werden. Die Konzentration der Spritzbrühe wird so gewählt, daß in 2 000 l Wasser/ha die jeweils gewünschten Wirkstoffmengen ausgebracht werden. Nach drei Wochen wird der Schädingungsgrad der Pflanzen bonitiert in % Schädigung im Vergleich zur Entwicklung der unbehandelten Kontrolle. Es bedeuten :

0 % = keine Wirkung (wie unbehandelte Kontrolle)
100 % = totale Vernichtung

Tabelle A

post-emergence-Test/Gewächshaus

| Wirkstoff bzw. Stoff-kombinationen | Aufwand-menge kg/ha | Wirkung | | | |
|---|---|---|---|---|---|
| | | Zuckerrüben | | Polygonum | |
| | | Gef. * | Ber. * | Gef. * | Ber. * |
| Isopropylmyristat (IPM) (bekannt) | 5 | 0 | | 0 | |
| Metamitron (bekannt) | 3 | 0 | | 65 | |
| JPM + Metamitron (erfindungsgemäß) | 5 + 3 | 0 | 0 | 100 | 65 |

gef. = gefundene Wirkung in Prozent
ber. = nach der Colby-Formel berechnete Wirkung in Prozent

Tabelle B

post-emergence-Test/Gewächshaus

| Wirkstoff bzw. Wirkstoff-kombination | Aufwand-menge kg/ha | Wirkung | | | |
|---|---|---|---|---|---|
| | | Weizen | | Galium | |
| | | Gef. * | Ber. * | Gef. * | Ber. * |
| Isopropylmyristat (IPM) (bekannt) | 2 | 0 | | 0 | |
| Ametridion (bekannt) | 1,4 | 0 | | 50 | |
| JPM + Ametridion (erfindungsgemäß) | 2 + 1,4 | 0 | 0 | 70 | 50 |

gef. = gefundene Wirkung in Prozent
ber. = nach der Colby-Formel berechnete Wirkung in Prozent

Tabelle C

post-emergence-Test/Gewächshaus

| Wirkstoff bzw. Wirkstoff-kombinationen | Aufwand-menge kg/ha | Wirkung | | | |
|---|---|---|---|---|---|
| | | Weizen | | Galium | |
| | | Gef. * | Ber. * | Gef. * | Ber. * |
| Isopropylmyristat (IPM) (bekannt) | 3,5 | 0 | | 0 | |
| Methabenzthiazuron (Atrazin) (bekannt) | 2 | 0 | | 30 | |
| JPM + Metrabenzthiazuron (erfindungsgemäß) | 3,5 + 2 | 0 | 0 | 90 | 30 |

gef. = gefundene Wirkung in Prozent
ber. = nach der Colby-Formel berechnete Wirkung in Prozent

**Patentansprüche**

1. Herbizide Mittel, gekennzeichnet durch einen Gehalt an einer Stoffkombination bestehend aus einem der folgenden Herbizid-Wirkstoffe :

4

a) 2-Chlor-4-ethylamino-6-isopropyl-amino-s-triazin (Atrazin),

b) 4-Amino-3-methyl-6-phenyl-as-triazin-5-(4H)-on (Metamitron) oder

c) 1-Amino-3-(2,2-dimethylpropyl)-6-ethylthio-s-triazin-2,4-dion (Ametridion) und dem synthetischen Spreitmittel Isopropylmyristat.

2. Herbizides Mittel nach Anspruch 1, dadurch gekennzeichnet, daß in den Stoffkombinationen das Gewichtsverhältnis von synthetischen Spreitmittel zu dem Herbizid-Wirkstoff zwischen 1 : 0,01 und 1 : 10 liegt.

3. Herbizide Mittel gemäß Anspruch 1, dadurch gekennzeichnet, daß in den Stoffkombinationen das Gewichtsverhältnis von synthetischem Spreitmittel zu dem Herbizid-Wirkstoff zwischen 1 : 0,05 und 1 : 7,5 liegt.

4. Verfahren zur Bekämpfung von Unkraut, dadurch gekennzeichnet, daß man ein herbizides Mittel gemäß Anspruch 1 vor oder nach dem Auflaufen der Pflanzen auf die Felder einwirken läßt.

5. Verwendung von herbiziden Mitteln gemäß Anspruch 1 zur Bekämpfung von Unkraut.

## Claims

1. Herbicidal agents, characterised in that they contain a substance combination consisting of one of the following herbicidal active compounds :

a) 2-chloro-4-ethylamino-6-isopropyl-amino-s-triazine (atrazine),

b) 4-amino-3-methyl-6-phenyl-as-triazin-5-(4H)-one (metamitron) or

c) 1-amino-3-(2,2-dimethylpropyl)-6-ethylthio-s-triazine-2,4-dione (ametridione) and the synthetic spreading agent isopropyl myristate.

2. Herbicidal agent according to Claim 1, characterised in that the weight ratio of synthetic spreading agent to the herbicidal active compound in the substance combination is between 1 : 0.01 and 1 : 10.

3. Herbicidal agents according to Claim 1, characterised in that the weight ratio of synthetic spreading agent to the herbicidal active compound in the substance combination is between 1 : 0.05 and 1 : 7.5.

4. Method of combating weeds, characterised in that a herbicidal agent according to Claim 1 is allowed to act on the fields before or after the emergence of the plants.

5. Use of herbicidal agents according to Claim 1 for combating weeds.

## Revendications

1. Agents herbicides, caractérisés par une teneur en une combination de matières consistant en une des matières actives herbicides suivantes :

a) 2-chloro-4-éthylamino-6-isopropyl-amino-s-triazine (Atrazin),

b) 4-amino-3-méthyl-6-phényl-as-triazine-5-(4H)-one, (Metamitron) ou

c) 1-amino-3-(2,2-diméthylpropyl)-6-éthylthio-s-triazine-2,4-dione (Ametridion) et en l'agent d'étalement synthétique, le myristate d'isopropyle.

2. Agent herbicide selon la revendication 1, caractérisé en ce que dans les combinaisons de matières, le rapport pondéral de l'agent d'étalement synthétique envers la matière active herbicide se situe entre 1 : 0,01 et 1 : 10.

3. Agents herbicides selon la revendication 1, caractérisés en ce que dans les combinaisons de matières, le rapport pondéral de l'agent d'étalement synthétique envers la matière active herbicide se situe entre 1 : 0,05 et 1 : 7,5.

4. Procédé pour combattre les mauvaises herbes, caractérisé en ce qu'on fait agir un agent herbicide selon la revendication 1 avant ou après l'émergence des plantes sur les champs.

5. Utilisation d'agents herbicides selon la revendication 1 pour combattre les mauvaises herbes.